# NOUVEAU FASCICULE DE BREVET EUROPEEN

(11) **EP 2 326 919 B2**
(45) Date de publication et mention de la décision concernant l'opposition: **21.03.2018**
(45) Mention de la délivrance du brevet: 17.12.2014
(21) Numéro de dépôt: 09740345.5
(22) Date de dépôt: 09.09.2009
(51) Int. Cl.: G01D 5/14

(54) **CAPTEUR DE POSITION LINÉAIRE OU ROTATIF À AIMANT PERMANENT POUR LA DÉTECTION D'UNE CIBLE FERROMAGNÉTIQUE**
LINEAR- ODER DREHPOSITIONSSENSOR MIT EINEM DAUERMAGNETEN ZUM DETEKTIEREN EINES FERROMAGNETISCHEN TARGETS
LINEAR OR ROTARY POSITION SENSOR WITH A PERMANENT MAGNET FOR DETECTING A FERROMAGNETIC TARGET

(30) Priorité: 24.09.2008 FR 0805261
(43) Date de publication de la demande: 01.06.2011
(73) Titulaire: Moving Magnet Technologies (MMT), 25000 Besançon (FR)
(72) Inventeur: FRACHON, Didier, F-25000 Besançon (FR)
(74) Mandataire: IP Trust
(86) Numéro de dépôt international: PCT/FR2009/001078
(87) Numéro de publication internationale: WO 2010/034896

(56) Documents cités:
- EP-A- 0 273 481
- EP-A- 1 477 772
- WO-A1-2008/029702
- DE-A1-102006 051 621
- US-A- 4 922 197
- US-A- 5 264 792
- US-A- 6 043 646
- US-A1- 2004 130 314
- US-B2- 6 922 052

## Description

### DOMAINE TECHNIQUE DE L'INVENTION

La présente invention concerne le domaine des capteurs magnétiques de position sans contact (linéaire ou rotatif) comportant au moins un aimant permanent et au moins un élément de mesure du champ magnétique sensible à l'amplitude et/ou à la direction du champ magnétique. L'invention concerne plus particulièrement des capteurs utilisés pour déterminer la présence d'une pièce ferromagnétique en mouvement (capteur digital) ou sa position linéaire ou angulaire (capteur analogique).

### ETAT DE LA TECHNIQUE ANTERIEURE

Les capteurs magnétiques (digitaux et analogiques) de position linéaire ou angulaire ont de nombreux avantages :
- pas de contact mécanique avec la partie mobile, et donc pas d'usure,
- insensibilité à la saleté,
- coût de production réduit,
- longue durée de vie.

Les capteurs magnétiques utilisés pour déterminer la position et/ou la vitesse d'une pièce ferromagnétique (pièce présentant des dents sur sa périphérie) sont typiquement utilisés dans l'industrie automobile pour connaître la position/vitesse de l'arme à came dans le but de commander l'allumage électronique du moteur.

La plupart des capteurs digitaux magnétiques de position sans contact utilisent des aimants permanents de forme cylindrique aimantés axialement associés à plusieurs éléments magnéto-sensible (sonde différentielle) ceci dans le but d'éliminer l'induction moyenne vue par les sondes. En effet, de par la forme de l'aimant, l'induction vue par une sonde est très élevée et donc très sensible aux variations des propriétés magnétiques de l'aimant avec les variations de température. Le calcul de la différence d'induction entre les deux éléments magnéto-sensibles permet d'annuler l'induction moyenne mais en revanche il devient alors difficile de connaître la position de l'élément à détecter au démarrage du système. L'utilisation de plusieurs éléments magnéto-sensibles induit également un coût plus important et un volume global du capteur plus élevé.

Il existe également des systèmes utilisant un aimant permanent, sensiblement cylindrique présentant une cavité, associé à un seul élément magnéto-sensible. L'aimant présentant une cavité permet de diminuer l'induction moyenne au niveau de l'élément magnéto-sensible et donc l'utilisation d'un seul élément magnéto-sensible. Ces systèmes permettent également de connaître la position de l'élément à détecter dès la mise en route du capteur.

La tendance actuelle pour ce type de capteur est d'avoir des capteurs de plus en plus petits sans pour autant perdre au niveau des performances. Les deux types de systèmes décrits ci-dessus ne permettent pas une diminution sensible de l'encombrement sans sacrifier les performances. De plus, la distance entre l'élément à détecter (cible) et le capteur est également de plus en plus importante et il est nécessaire de garantir les performances et cela ne peut être fait que par une augmentation de la variation de l'induction magnétique au niveau de l'élément magnéto-sensible en fonction de la position de la cible.

On connaît, dans l'état de la technique, le brevet FR2724722 de la demanderesse et le brevet US6043646 qui décrivent un capteur de position/vitesse digital avec un aimant permanent sensiblement cylindrique utilisant un seul élément magnéto-sensible. Les systèmes décrits permettent d'obtenir au niveau de l'élément magnéto-sensible une induction moyenne très proche de 0 G mais toute diminution de la taille de l'aimant entraîne une diminution de la sensibilité du capteur et donc une diminution des performances.

On connaît également le brevet US5781005 décrivant un capteur digital de position utilisé pour la détection d'une pièce ferromagnétique présentant une pluralité de dents. Ce capteur utilise deux aimants permanents aimantés dans une même direction et collés contre une plaque ferromagnétique. Une sonde à effet Hall placée au dessus de cet assemblage, entre la cible et l'aimant, mesure la variation de l'induction magnétique dans une direction parallèle à l'aimantation. L'élément magnéto-sensible de la sonde étant placé au proche de la cible. Avec un tel système, il est difficile d'avoir une induction moyenne proche de 0 G et une diminution du diamètre extérieur conduit à une diminution des performances.

On connaît également dans l'état de la technique le brevet de FR2845469 de la demanderesse, qui décrit un capteur analogique de position linéaire ou rotatif. Ce capteur analogique mesure la position d'une pièce ferromagnétique en mouvement (linéaire ou rotatif) par l'intermédiaire de la variation d'induction générée par la variation de réluctance entre une pièce ferromagnétique et un aimant permanent, la variation d'induction étant mesurée par une sonde à effet Hall. Le problème de ce système est que la réduction de taille du capteur comprenant l'aimant et la sonde entraîne une diminution des performances et une difficulté à travailler avec une induction moyenne au niveau de la sonde à effet Hall proche de 0 Gauss.

### EXPOSE DE L'INVENTION

La présente invention se propose de remédier aux inconvénients de l'état de la technique en réalisant un capteur de position de dimensions réduites permettant de détecter une information de position dès que le capteur est alimenté, sans altérer ses performances.

Pour ce faire, l'invention se propose d'utiliser un aimant permanent sensiblement en forme de parallélépipède ou de cylindre présentant une cavité, dans laquelle est insérée au moins élément magnéto-sensible et une pièce ferromagnétique sensiblement en forme de cône.

À ce titre, l'invention concerne un capteur magnétique selon la revendication 1.

Ce capteur est capable dans un volume réduit d'apporter des performances égales voire supérieures aux capteurs actuels.

Selon une variante non limitative, l'aimant permanent sera cylindrique en forme de U aimanté sensiblement axialement.

Selon l'invention, une pièce ferromagnétique conique tronquée sera placée à l'intérieur de la cavité de l'aimant permanent. De préférence, cette pièce conique aura sa base fixée sur la partie horizontale du U de l'aimant permanent. Cette pièce ferromagnétique a pour but de canaliser les lignes de champ générées par l'aimant vers le ou les éléments magnéto-sensibles et de créer une zone de faible induction quand le capteur n'est pas en présence de la cible à détecter.

L'élément magnéto-sensible sera placé au dessus de la partie tronquée du cône ferromagnétique dans une zone d'induction moyenne proche de 0 G et mesurera la composante axiale du champ magnétique au plus près de la partie la plus étroite du cône ferromagnétique tronqué. De façon pratique, les éléments magnéto-sensibles (sonde à effet Hall, AMR, GMR ...) sont généralement disponibles encapsulés dans un boîtier plastique. Il est alors impossible de mettre l'élément magnéto-sensible en contact avec l'élément ferromagnétique mais le boîtier contenant l'élément magnéto-sensible sera positionné de manière à minimiser la distance entre la pièce ferromagnétique et l'élément magnéto-sensible.

De préférence, les parties verticales du U de l'aimant permanent remontent des deux côtés de l'élément magnéto-sensible et au plus proche de la cible à détecter.

De préférence, l'élément magnéto-sensible sera une simple sonde à effet Hall de type switch à seuil de commutation fixe proche de 0 G. Dans une variante, l'élément magnéto-sensible sera une sonde à effet Hall de type switch à seuil programmable.

Dans une autre variante, l'élément magnéto-sensible est une sonde à effet Hall linéaire et programmable.

Dans une autre variante, l'élément magnéto-sensible placé dans la cavité sera sensible à la direction du champ magnétique.

L'invention présentée a plusieurs avantages par rapport aux solutions de l'art antérieur :
- à performance égale la possibilité de réduire la taille du capteur,
- volume d'aimant plus faible et donc un coût de fabrication moins élevé,
- performance accrue en terme d'entrefer de travail, possibilité de travailler avec un entrefer cible-aimant plus important en conservant des performances élevées,
- utilisation de sonde à effet Hall simple et donc économique.

L'un des avantages de cette invention est tout d'abord que la réduction du volume permet de maintenir des performances élevées tout en amenant un avantage économique dû au fait que le volume d'aimant pour le fonctionnement du capteur est réduit.

Pour des raisons de fabrication la base de la pièce ferromagnétique peut être directement surmoulée dans l'aimant, cela permet de renforcer la tenue mécanique de l'assemblage.

La forme de l'aimant est simple et est compatible avec les procédés de réalisation utilisés pour la fabrication d'aimant permanent. Des aimants à base de ferrite, NbFeB ou SmCo par exemple peuvent être utilisés avec différentes méthodes de fabrication telle que l'injection, le pressage ou le frittage.

### BREVE DESCRIPTION DES FIGURES

L'invention sera mieux comprise à la lecture de la description et des figures qui suivent :
- les figures 1 a à 1 d représentent plusieurs structures de l'art antérieur (dans l'ordre US5781005, FR2845469, FR2724722, US6043646), présentant une pièce ferromagnétique insérée entre deux aimants aimantés axialement et deux structures présentant un aimant avec une cavité.
- La figure 2 représente la configuration préférentielle de la présente invention.
- La figure 3 représente une configuration alternative de la présente invention.
- La figure 4 représente le capteur selon la présente invention associé à une cible rectangulaire ayant un mouvement de translation.
- La figure 5 représente une variante analogique du capteur selon la présente invention associé à une cible à profil variable ayant un mouvement de translation.
- La figure 6 représente les lignes de champ dans le système avec l'aimant seul.
- La figure 7 représente les lignes de champ dans le système avec l'aimant et la cible à détecter.
- La figure 8 représente la variation d'induction, au niveau de l'élément à effet Hall, mesurée par le capteur de la présente invention en fonction de la position longitudinale de la cible à détecter. Cette variation de signal est comparée à la variation d'induction dans le cas de la structure de l'art antérieur.
- La figure 9 représente la modulation d'induction en fonction de l'entrefer de mesure pour la structure de la présente invention et la structure de l'art antérieur.
- La figure 10 représente la modulation d'induction en fonction de l'entrefer de mesure pour différentes positions de l'élément à effet Hall.
- La figure 11 représente la modulation d'induction en fonction de la forme du cône pour différentes positions de l'élément à effet Hall.

### DESCRIPTION DETAILLEE D'UN MODE DE REALISATION

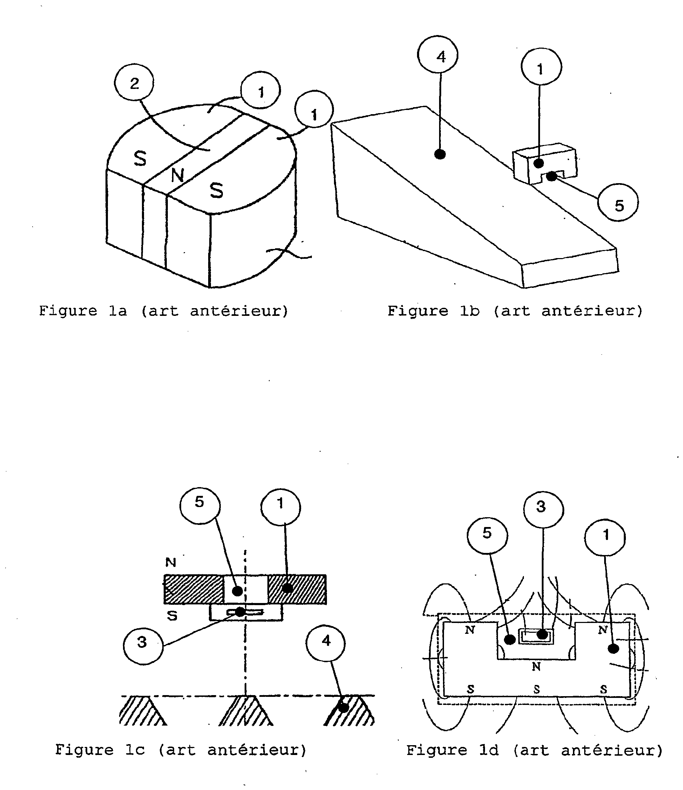

Les figures 1 a à 1 d représentent quatre structures de capteurs digitaux appartenant à l'art antérieur.

La figure 1 a présente un sandwich de deux aimants permanents 1 et d'une pièce ferromagnétique 2 sous la forme d'une tôle. Au dessus de cet assemblage est placée une sonde à effet Hall 3 mesurant la variation d'induction en fonction de la position de la cible à détecter.

Les figures 1b et 1d présentent un aimant 1 avec une cavité 5 dans laquelle est placée une sonde 3 magnétosensible.

La figure 1c présente un aimant 1 avec une cavité débouchant 5. La sonde 3 est placée devant cet aimant 1 entre l'aimant 1 et la pièce, ou cible, ferromagnétique 4 à détecter.

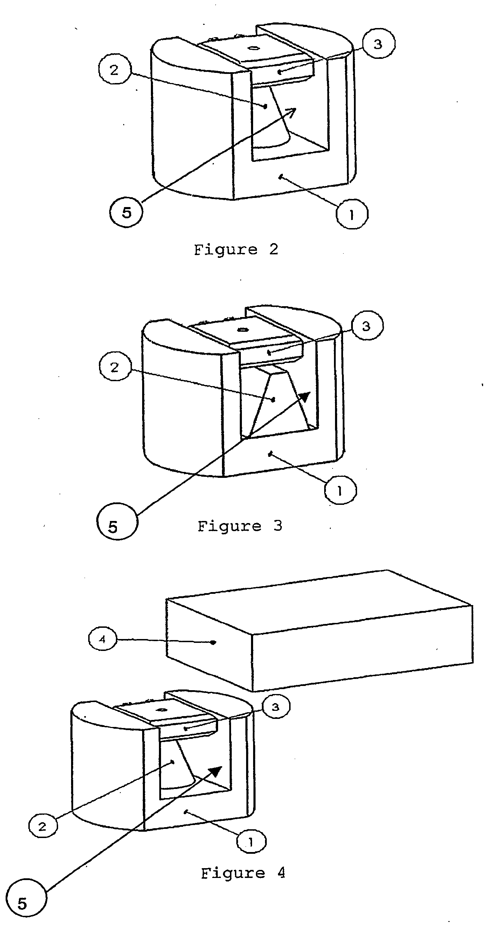

La figure 2 représente un aimant 1 en forme de U ayant une aimantation dont la direction est sensiblement orientée suivant son axe. A l'intérieur de la cavité 5 de l'aimant en forme de U est installée une pièce ferromagnétique 2 en forme de cône tronqué dont la base est appuyée sur la partie horizontale du U. Au dessus de cette pièce ferromagnétique est placée une sonde à effet Hall 3, dont l'élément magnéto-sensible est positionné au plus proche de la partie supérieure de la pièce ferromagnétique. La hauteur du cône est telle qu'elle libère un espace suffisant pour pouvoir insérer la sonde entre le cône et la partie supérieure de l'aimant afin de né pas augmenter la distance entre le capteur et la cible ferromagnétique à détecter.

La figure 3 représente une variante de la présente invention dans laquelle il y a un aimant 1 en forme de U ayant une aimantation dont la direction est sensiblement orientée suivant son axe. A l'intérieur de la cavité 5 de l'aimant en forme de U est installée une pièce ferromagnétique 2 en forme de cône tronqué dont la base est appuyée sur la partie horizontale du U. La base de cette pièce ferromagnétique est rectangulaire. Au dessus de cette pièce ferromagnétique est placée une sonde à effet Hall 3, dont l'élément magnéto-sensible est positionné au plus proche de la partie supérieure de la pièce ferromagnétique. La hauteur du cône est telle qu'elle libère un espace suffisant pour pouvoir insérer la sonde entre le cône et la partie supérieure de l'aimant afin de ne pas augmenter la distance entre le capteur et la cible ferromagnétique à détecter.

La figure 4 représente le capteur suivant la présente invention ainsi qu'une pièce ferromagnétique 4 qu'il est nécessaire de détecter, pièce ferromagnétique parallélépipédique et qui présente un déplacement linéaire. Le déplacement de la pièce ferromagnétique peut se faire suivant deux directions :
- soit un mouvement transversal de la cible dans un plan sensiblement parallèle à la face supérieure de l'aimant permanant ;
- soit un mouvement de la cible (en éloignement ou rapprochement) dans un plan perpendiculaire à la face supérieure de l'aimant permanent.

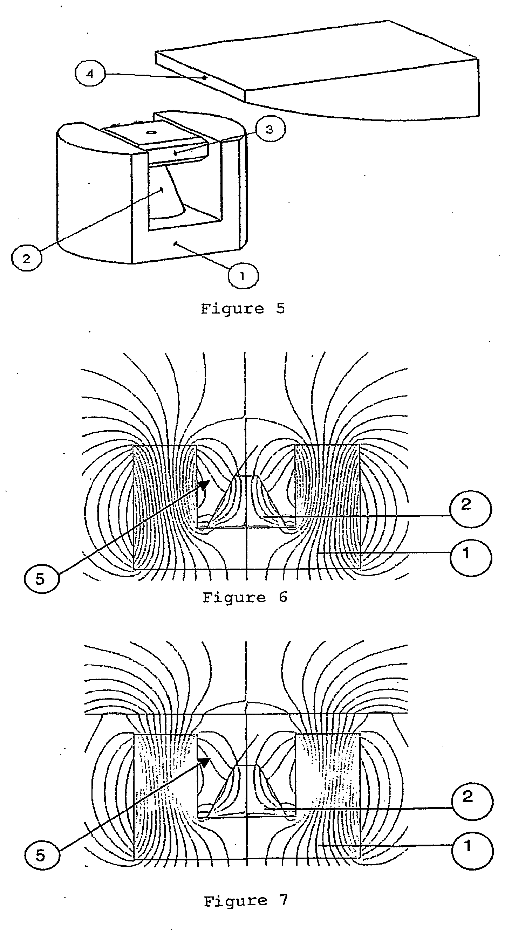

La figure 5 représente un capteur analogique de position linéaire selon la présente invention. Le capteur est constitué par un aimant permanent 1 aimanté sensiblement axialement, une pièce ferromagnétique 2 et un élément magnétosensible 3. Ce capteur est associé à une cible ferromagnétique 4 à profil variable se déplaçant transversalement par rapport au capteur, ce profil définissant donc un entrefer variable entre le capteur et la dite cible permettant d'obtenir une variation d'induction au niveau de l'élément magnéto-sensible suivant une fonction prédéfinie linéaire ou pas en fonction de la position linéaire de la cible. Le profil de la cible peut être ajusté afin d'obtenir une variation d'induction suivant n'importe quelle fonction monotone et continue.

La figure 6 représente les lignes de champ générées dans la structure de la présente invention. La pièce ferromagnétique conique permet d'atteindre un niveau d'induction magnétique proche de 0 G au niveau l'élément magnétosensible car cette pièce conique permet d'attirer et de concentrer les lignes de champ au niveau de l'élément magnéto-sensible.

La figure 7 représente les lignes de champ générées dans la structure de la présente invention en présence de la cible ferromagnétique à détecter.

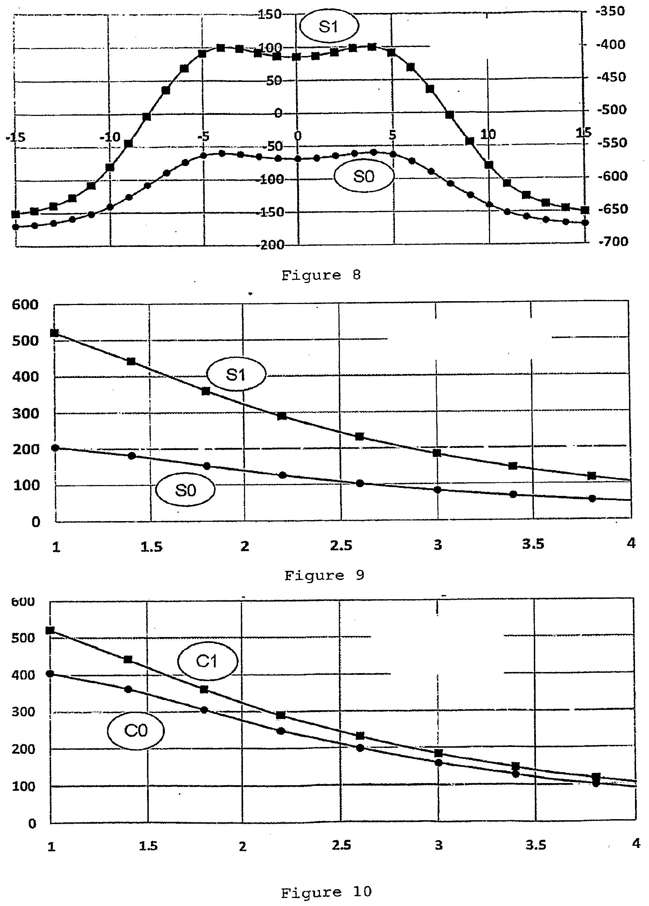

La figure 8 représente la variation de l'induction magnétique vue par l'élément magnéto-sensible en fonction de la position linéaire de la cible à détecter (voir figure 4). Sur cette même courbe est représenté le signal pour le capteur selon la présente invention S₁ et le signal pour la structure de l'art antérieur S₀.

En présence de la cible (partie centrale de la courbe) le niveau d'induction est élevé et quand la cible n'est plus en face du capteur le niveau d'induction baisse pour atteindre un minimum. Pour un encombrement global équivalent, la présente invention permet d'atteindre une modulation d'induction (signal en face de la cible - signal sans cible) nettement supérieure à celle obtenue avec la structure de l'art antérieur.

La figure 9 présente une comparaison de la modulation d'induction (induction capteur en face de la cible moins induction capteur sans cible) pour la structure de la présente invention et la structure de l'art antérieur en fonction de la distance entre le capteur et la cible à détecter. De la même façon que précédemment, le signal pour le capteur selon la présente invention S, et le signal pour la structure de l'art antérieur S₀.

Quelque soit la distance cible-capteur la présente invention apporte un net avantage en ce qui concerne la modulation d'induction. Ce paramètre étant déterminant pour les performances du capteur car il détermine la capacité à travailler avec un entrefer cible-capteur important et pour un même entrefer il augmente le rapport signal sur bruit et la précision sur la détection de la cible.

La figure 10 représente pour la présente invention la variation de la modulation d'induction en fonction de la position de l'élément magnéto-sensible par rapport au sommet de l'aimant.

La courbe C1 représente la modulation d'induction en fonction de la distance capteur-cible (modulation = différence d'induction au niveau de l'élément magnéto-sensible en présence et sans la cible) pour une distance sommet du cône et élément magnéto-sensible égale à 0.5 mm et la courbe C2 représente la modulation d'induction pour une distance sommet du cône et élément magnétosensible égale à 1 mm.

Plus l'élément magnéto-sensible est situé proche du sommet du cône ferromagnétique plus la modulation d'induction est importante, la limite étant bien sûr lorsque l'élément magnéto-sensible touche le sommet du cône ce qui est en réalité impossible du fait du boîtier qui entoure l'élément magnéto-sensible et qui impose donc une distance minimum.

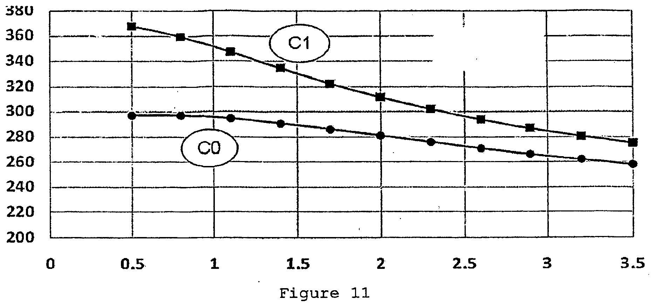

La figure 11 représente la variation de la modulation d'induction en fonction du rayon du sommet du cône pour deux positions de l'élément magnéto-sensible, le rayon de la base du cône étant fixe.

La courbe C1 représente la modulation d'induction en fonction du rayon du sommet du cône pour une distance entre le sommet du cône et l'élément magnéto-sensible égale à 0.5 mm et la courbe C2 représente la modulation d'induction en fonction du rayon du sommet du cône pour une distance entre le sommet du cône et l'élément magnéto-sensible égale à 1 mm.

La forme conique de la pièce ferromagnétique permet d'augmenter la modulation d'induction, en effet plus la pointe est fine plus la modulation augmente. Il faut toutefois prendre en compte la tolérance sur le positionnement de l'élément magnéto-sensible, en effet plus la pointe du cône sera fine plus on sera sensible a un écart de positionnement de l'élément magnéto-sensible.

## Revendications

1. Capteur magnétique sans contact apte à mesurer le déplacement angulaire ou linéaire d'au moins une cible ferromagnétique mobile (4), comportant au moins un aimant permanent (1) de forme sensiblement cylindrique ou parallélépipédique, avec une aimantation sensiblement perpendiculaire à sa base et présentant une cavité (5), au moins un élément ferromagnétique (2) étant placé à l'intérieur de ladite cavité (5), et au moins un élément magnéto-sensible (3) placé à l'intérieur de ladite cavité (5), l'aimant permanent (1) présentant une surface supérieure en regard de la cible ferromagnétique (4) **caractérisé en ce que** ledit élément ferromagnétique (2) présente une forme de cône tronqué, ledit élément magnéto-sensible étant placé au-dessus de l'élément ferromagnétique (2) et en dessous de la surface supérieure de l'aimant (1), ledit élément magnéto-sensible (3) étant situé au plus proche du sommet dudit élément ferromagnétique (2).

2. Capteur magnétique de déplacement angulaire ou linéaire selon la revendication 1, **caractérisé en ce que** l'élément magnéto-sensible (3) mesure l'amplitude du champ magnétique.

3. Capteur magnétique de déplacement angulaire ou linéaire selon la revendication 1, **caractérisé en ce que** l'élément magnéto-sensible (3) mesure la direction du champ magnétique.

4. Capteur magnétique de déplacement angulaire ou linéaire l'une quelconque des revendications 1 à 3, **caractérisé en ce que** l'élément magnéto-sensible (3) est le plus proche possible de la pièce ferromagnétique (2).

5. Capteur magnétique de déplacement angulaire ou linéaire selon l'une quelconque des revendications 1 à 4, **caractérisé en ce que** l'élément magnéto-sensible (3) est un élément à effet Hall.

6. Capteur magnétique de déplacement selon l'une quelconque des revendications 1 à 5, **caractérisé en ce que** la cible ferromagnétique (4) est mobile dans un plan perpendiculaire à la direction d'aimantation.

7. Capteur magnétique de déplacement selon l'une quelconque des revendications 1 à 6, **caractérisé en ce que** la cible ferromagnétique (4) est mobile dans un plan parallèle à la direction d'aimantation.

8. Capteur magnétique de déplacement rotatif selon la revendication 6 **caractérisé en ce que** la cible ferromagnétique (4) est mobile autour d'un axe parallèle à la direction d'aimantation.

9. Capteur magnétique de déplacement rotatif selon la revendication 7 **caractérisé en ce que** la cible ferromagnétique (4) est mobile autour d'un axe perpendiculaire à la direction d'aimantation.

10. Capteur magnétique de déplacement selon l'une quelconque des revendications 1 à 9, **caractérisé en ce que** l'élément magnéto sensible (3) est placé dans une zone où l'induction moyenne selon la direction d'aimantation est proche de 0 Gauss.

11. Capteur magnétique de déplacement selon la revendication 10 **caractérisé en ce que** l'élément magnétosensible (3) est associé à un circuit électronique de traitement du signal ayant un point de basculement proche de 0 Gauss.

## Patentansprüche

1. Berührungsloser Magnetsensor, der in der Lage ist, die Winkel- oder Linearverschiebung mindestens eines ferromagnetischen beweglichen Ziels (4) zu messen, und welcher mindestens einen Dauermagneten (1) in einer im Wesentlichen zylindrischen oder quaderförmigen Form mit einer im Wesentlichen senkrechten Magnetisierung am Sockel aufweist und einen Hohlraum (5) enthält, wobei mindestens ein ferromagnetisches Element (2) und mindestens ein magnetempfindliches Element (3) in besagten Hohlraum (5) eingesetzt sind, wobei der Dauermagnet (1) eine obere Fläche gegenüber dem ferromagnetischen Ziel (4) aufweist, **dadurch gekennzeichnet, dass** besagtes ferromagnetisches Element (2) eine Kegelstumpfform aufweist, wobei besagtes magnetempfindliches Element oberhalb des ferromagnetischen Elements (2) und unterhalb der oberen Fläche des Magneten (1) angeordnet wird, wobei sich besagtes magnetempfindliches Element (3) möglichst nah an der Spitze des besagten ferromagnetischen Elements (2) befindet.

2. Magnetsensor mit winkelförmiger oder linearer Verschiebung nach Anspruch 1, **dadurch gekennzeichnet, dass** das magnetempfindliche Element (3) die Amplitude des Magnetfeldes misst.

3. Magnetsensor mit winkelförmiger oder linearer Verschiebung nach Anspruch 1, **dadurch gekennzeichnet, dass** das magnetempfindliche Element (3) die Richtung des Magnetfeldes misst.

4. Magnetsensor mit winkelförmiger oder linearer Verschiebung nach einem der Ansprüche 1 bis 3, **dadurch gekennzeichnet, dass** sich das magnetempfindliche Element (3) möglichst nah am ferromagnetischen Element (2) befindet.

5. Magnetsensor mit winkelförmiger oder linearer Verschiebung nach einem der Ansprüche 1 bis 4, **dadurch gekennzeichnet, dass** das magnetempfindliche Element (3) ein Hall-Element ist.

6. Magnetischer Verschiebungssensor gemäß einem der Ansprüche 1 bis 5, **dadurch gekennzeichnet, dass** das ferromagnetische Ziel (4) auf einer senkrechten Ebene in Magnetisierungsrichtung beweglich ist.

7. Magnetischer Verschiebungssensor nach einem der Ansprüche 1 bis 6, **dadurch gekennzeichnet, dass** das ferromagnetische Ziel (4) auf einer Ebene parallel zur Magnetisierungsrichtung beweglich ist.

8. Magnetsensor mit rotierender Verschiebung nach Anspruch 6, **dadurch gekennzeichnet, dass** das ferromagnetische Ziel (4) um eine Achse parallel zur Magnetisierungsrichtung beweglich ist.

9. Magnetsensor mit rotierender Verschiebung nach Anspruch 7, **dadurch gekennzeichnet, dass** das ferromagnetische Ziel (4) um eine Achse senkrecht zur Magnetisierungsrichtung beweglich ist.

10. Magnetischer Verschiebungssensor nach einem der Ansprüche 1 bis 9, **dadurch gekennzeichnet, dass** das magnetempfindliche Element (3) in einem Bereich positioniert wird, wo die durchschnittliche Induktion in Magnetisierungsrichtung bei 0 Gauß liegt.

11. Magnetischer Verschiebungssensor nach Anspruch 10, **dadurch gekennzeichnet, dass** das magnetempfindliche Element (3) mit einem elektronischen Schaltkreis für die Verarbeitung des Signals verknüpft ist, der einen Kipppunkt nahe 0 Gauß hat.

## Claims

1. A contactless magnetic sensor able to measure the angular or linear movement of at least one movable ferromagnetic target (4), comprising at least one permanent magnet (1) with a substantially cylindrical or parallelepipedal shape, with magnetisation substantially perpendicular to its base and having a cavity (5), at least one ferromagnetic element (2) being placed inside said cavity (5), and at least one magnetosensitive element (3) placed inside said cavity (5), the permanent magnet (1) having a top surface facing the ferromagnetic target (4), **characterised in that** said ferromagnetic element (2) has the shape of a truncated cone, said magnetosensitive element being placed above the ferromagnetic element (2) and below the top surface of the magnet (1), said magnetosensitive element (3) being situated as close as possible to the top of said ferromagnetic element (2).

2. A magnetic angular- or linear-movement sensor according to claim 1, **characterised in that** the magnetosensitive element (3) measures the amplitude of the magnetic field.

3. A magnetic angular- or linear-movement sensor according to claim 1, **characterised in that** the magnetosensitive element (3) measures the direction of the magnetic field.

4. A magnetic angular- or linear-movement sensor according to any of claims 1 to 3, **characterised in that** the magnetosensitive element (3) is as close as possible to the ferromagnetic piece (2).

5. A magnetic angular- or linear-movement sensor according to any of claims 1 to 4, **characterised in that** the magnetosensitive element (3) is a Hall effect element.

6. A magnetic movement sensor according to any of claims 1 to 5, **characterised in that** the ferromagnetic target (4) is able to move in a plane perpendicular to the magnetisation direction.

7. A magnetic movement sensor according to any of claims 1 to 6, **characterised in that** the ferromagnetic target (4) is able to move in a plane parallel to the magnetisation direction.

8. A magnetic rotary-movement sensor according to claim 6, **characterised in that** the ferromagnetic target (4) is able to move about an axis parallel to the magnetisation direction.

9. A magnetic rotary-movement sensor according to claim 7, **characterised in that** the ferromagnetic target (4) is able to move about an axis perpendicular to the magnetisation direction.

10. A magnetic movement sensor according to any of claims 1 to 9, **characterised in that** the magnetosensitive element (3) is placed in a zone where the average induction in the magnetisation direction is approximately 0 gauss.

11. A magnetic movement sensor according to claim 10, **characterised in that** the magnetosensitive element (3) is associated with an electronic circuit for processing the signal having a switching point close to 0 gauss.
